# EUROPÄISCHE PATENTANMELDUNG

(11) **EP 0 880 264 A1**
(43) Veröffentlichungstag der Anmeldung: **25.11.1998**
(21) Anmeldenummer: 97108321.7
(22) Anmeldetag: 22.05.1997
(51) Int. Cl.: H04M 15/28, H04M 15/00

(54) **Verfahren zur Vergebührung von Verbindungen in einem Kommunikationsnetz**

(71) Anmelder: SIEMENS AKTIENGESELLSCHAFT, 80333 München (DE)
(72) Erfinder: Huyghe, Carlos, Dipl.-Ing, 9840 De Pinte (BE); De Bosscher, Dirk, Dipl.-Ing., 9890 Gavere (BE); Renier, Dick, 9060 Zelzate (BE); Hamann, Jan, Dipl.-Ing., 81249 München (DE)

(57) **Zusammenfassung**

Der Erfindung liegt die Aufgabe zugrunde, ein Verfahren zur Vergebührung anzugeben, das bei Tarifänderungen ein genaues Umschalten von Tarifen gewährleistet ohne hierzu eine Belastung des Netzes mit Message-Bursts durch Tarifmeldungen hervorzurufen.
Diese Aufgabe wird dadurch gelöst, daß in einer Tarifmeldung ein aktueller Tarif und/oder mindestens ein nächstfolgender Tarif mit zugehörigem Tarifumschaltezeitpunkt für den nächstfolgenden Tarif übertragen werden.

## Beschreibung

Bei Verfahren zur Vergebührung von Verbindungen in einem Kommunikationsnetz werden call-individuelle Tarifmeldungen von den Tarife bestimmenden Netzknoten, sogenannten Tarifbestimmungspunkten, zu den Tarif verarbeitenden Netzknoten, sogenannten Tarifverarbeitungspunkten, versandt.

Der Erfindung liegt die Aufgabe zugrunde, ein Verfahren zur Vergebührung von Verbindungen in einem Kommunikationsnetz anzugeben, das bei Tarifänderungen in dem Tarifverarbeitungspunkt ein genaues Umschalten von Tarifen zu absoluten Umschaltezeitpunkten gewährleistet ohne hierzu eine Belastung des Netzes mit Message-Bursts durch Tarifmeldungen hervorzurufen.

Die genannte Aufgabe wird durch ein Verfahren gemaß den Merkmalen von Anspruch 1 gelöst.

Eine Ausgestaltung der Erfindung ist durch Anspruch 2 gegeben. Durch diese Ausgestaltung wird für die überwiegende Zahl von Verbindungen nur eine einzige Tarifmeldung benötigt.

Eine Ausgestaltung der Erfindung ist durch Anspruch 3 gegeben. Durch diese Ausgestaltung wird ein sofortiges Umschalten von einem laufenden auf den eintreffenden Tarif (sofort nach Eintreffen des Tarifes mit der Nachricht) ermöglicht.

Im folgenden wird ein Ausführungsbeispiel der Erfindung anhand der Zeichnung naher erläutert.

Zunächst wird der Vorgang der Gebührenerstellung naher erläutert, der in drei Einzelvorgänge aufgespalten werden kann, nämlich die Tarifbestimmung, die Gebührendatenerfassung (Gebührenaufzeichnung) und die Rechnungserstellung.

Unter Tarifbestimmung ist die Ermittlung des Tarifes einer Verbindung aufgrund der Entfernung (Ursprungs-Ziel-Beziehung), der Zeit (z.B. Wochentag, Tageszeit) und/oder weiterer Zusatzkriterien (wie z.B. der Übertragungsqualität) zu verstehen.

Unter Gebührendatenerfassung ist die verbindungsindividuelle Erstellung eines Datensatzes (im folgenden auch als Record bezeichnet) mit allen zur späteren Rechnungserstellung erforderlichen Daten, bzw. die sofortige Umsetzung des Tarifes in Gebühreneinheiten und in die Erfassung mit teilnehmerbezogenen Gebührenzählern zu verstehen.

Unter Rechnungserstellung ist die teilnehmerbezogene Zusammenfassung und Auswertung der erstellten Datensätze bzw. Gebührenzählerstände für einen definierten Abrechnungszeitraum zu verstehen.

Die Tarifbestimmung und Gebührendatenerfassung wird durch die Vermittlungsstellen ausgeführt, welche von den Systemlieferanten (Equipment Supplier) wie z.B. Siemens geliefert werden. Diese Vermittlungsstellen werden durch die Betreibergesellschaften, wie z.B. Deutsche Telekom zu je einem Netz verbunden und innerhalb des Netzes betrieben.

Die Rechnungserstellung wird schließlich durch eine Nachverarbeitung (Post Processing) ausgeführt, welche auf separaten Großrechnern läuft. Die Schnittstelle zwischen Vermittlungsstellen und Großrechner wird durch die periodische Übertragung der erstellten Datensätze bzw. Teilnehmer-Gebührenzähler realisiert.

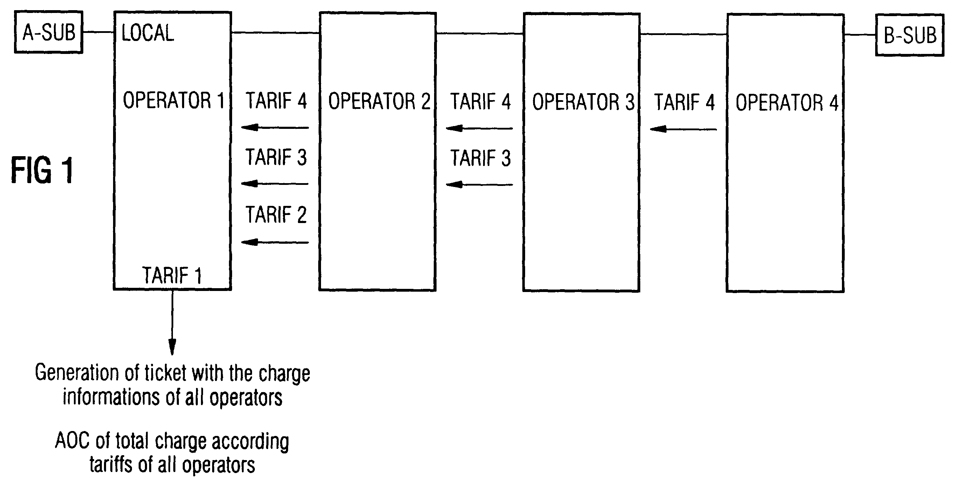

FIG 1 zeigt das Beispiel einer zentralen Gebührendatenerfassung durch die Ursprungs-Vermmittlungsstelle (lokale Vermittlungsstelle).

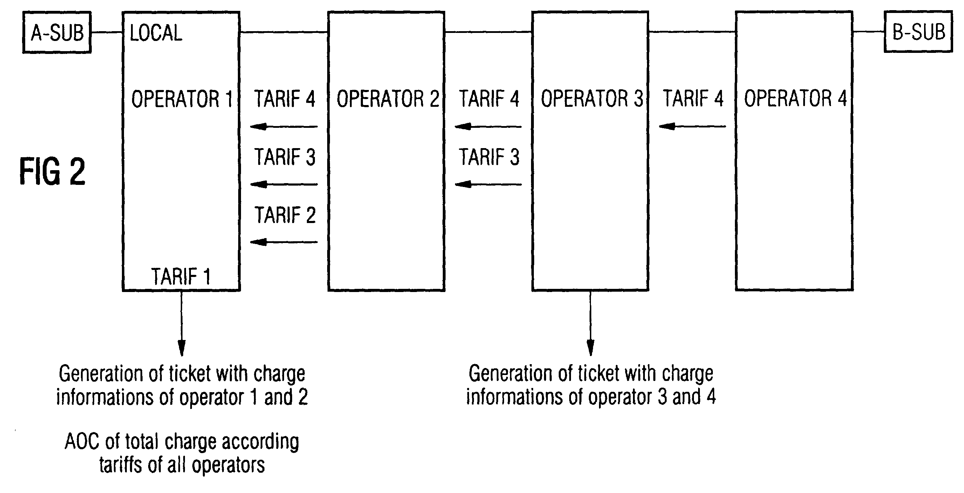

FIG 2 zeigt das Beispiel einer dezentralen Gebührendatenerfassung durch mehrere Vermittlungsstellen.

Im folgenden werden die neuen Tarifmeldungen CRGE, CRA, und CRAO näher erläutert.

Die neuen Tarifmeldungen, in denen ein Tarif explizit, d.h. in Tarif-Einheiten (z.B. in einem Währungs-Format oder einem Meterpuls-Format) pro Tarifintervall (Zeittakt), angegeben wird, ermöglichen eine Tarifierung in deregulierten Netzen, d.h. Netzen mit unterschiedlicher Administration.

Die Tarifmeldung CRGE ermöglicht drei verschiedene Methoden des Tarifwechsels, nämlich
- einen Tarifwechsel bei Empfang der Tarifmeldung (wird im folgenden auch als 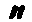 sofortiger" Tarifwechsel bezeichnet),
- einen Tarifwechsel bei Ablauf der sogenannten Tarifdauer ( Zeitdauer innerhalb dessen die Währungsrate gültig ist),
- einen Tarifwechsel zu einem absoluten (Tarif-)Umschaltezeitpunkt.

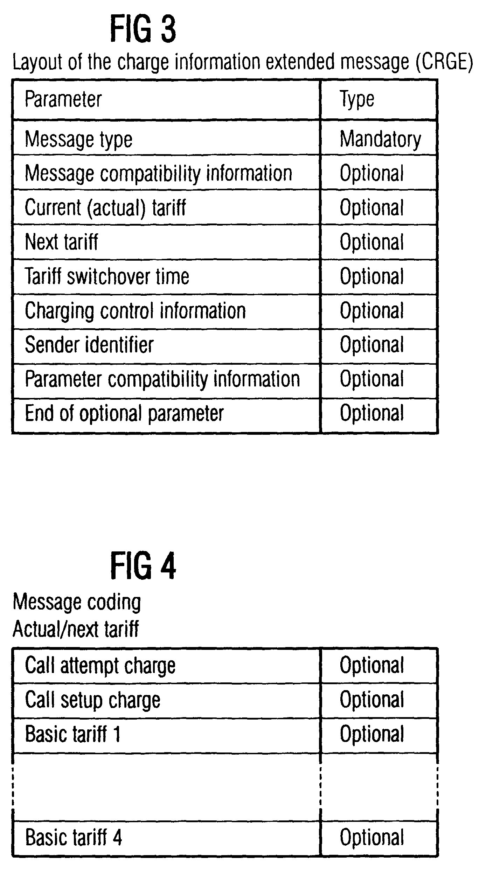

FIG 3 zeigt das Layout der Tarifmeldung CRGE.

Das Layout umfaßt eine Komponente 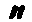 Message Type", die angibt um welche Message es sich tatsachlich handelt. Anhand des 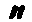 Message Type" wird beim Empfänger die richtige Applikation ausgewählt.

Das Layout umfaßt des weiteren eine Komponente 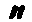 Tariff Control Information", die u.a. den sogenannten Vergebührungsindikator enthalt, der angibt, ob die Tarifmeldung von der die Tarifmeldung empfangenden Vermittlungsstelle zum Zwecke der Vergebührungaufzeichnung verarbeitet werden darf oder nicht.

Im letztgenannten Fall ist der Tarif bereits zum Zwecke der Vergebührungaufzeichnung verabeitet worden und ist nur zum Zwecke der Gebühren-Anzeige rückwärts zur Ursprungsvermittlungsstelle gesandt worden.

Das Layout umfaßt des weiteren eine Komponente 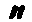 Sender-Kennung" (Sender Identifier), die die Betreiber-Kennung und/oder den signalling point code derjenigen Vermittlungsstelle enthalt, die den Tarif bestimmt hat.

Das Layout umfaßt schließlich die Komponenten 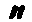 aktueller Tarif", 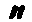 nächstfolgender Tarif" und 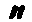 absoluter Tarifumschaltezeitpunkt", deren Bedeutung im folgenden deutlich wird.

Während des Verbindungsaufbaus einer Verbindung (Call) wird die Tarifmeldung CRGE optimal genutzt, wenn folgende Informationen zu übertragen sind:
- der aktuelle Tarif, der sofort aktiviert werden muß. Der genannte Tarif kann eine Tarifsequenz von bis zu vier Basistarifen umfassen. Jeder Basistarif umfaßt eine Währungsrate (Währungseinheiten pro Tarifzeitintervall) und eine Tarifdauer (ganzzahliges Vielfaches des genannten Tarifzeitintervalls), innerhalb dessen die Währungsrate gültig ist.
- der nächste (nächstfolgenden) Tarif, der zu einem absoluten Umschaltezeitpunkt aktiviert werden muß.
- der genannte absolute Umschaltezeitpunkt.

Umfaßt die genannte Tarifmeldung wahrend des Gesprächszustandes (aktive Phase einer Verbindung) die Information 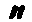 aktueller Tarif", so wird sie dahingehend interpretiert, daß der bisher aktuelle Tarif sofort ersetzt werden muß (replace tariff immediately!).

FIG 4 zeigt das Layout der in der Tarifmeldung CRGE enthaltenen Information für den aktuellen Tarif. Das Layout für den aktuellen Tarif ist identisch zu dem Layout für den nächsten Tarif, jedoch bestehen Unterschiede im Zweck der das Layout beinhaltende Elemente und in der Aktivierungszeit.

Das Informationselement 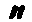 aktueller Tarif" ist in der für einen Call ersten Tarifmeldung eines Betreibers (genauer einer spezifischen Betreiber/Vergebührungstyp-Kombination) enthalten. Die Angabe dieser Information in der ersten Tarifmeldung ist zwingend notwendig, da sie den ersten Tarif darstellt, der bei diesem Call für den entsprechenden Betreiber aktiviert wird.

Das Informationselement 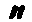 aktueller Tarif" kann des weiteren in jeder folgenden Tarifmeldung für eine spezifische Betreiber/Vergebührungstyp-Kombination enthalten sein, d. h. sie ist in diesem Fall optional. Wenn diese optionale Information gesendet wird, dann ersetzt sie den aktuellen Tarif sofort (replace tariff immediately!).

Die Information 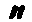 nächster Tarif" stellt eine optionale Informationskomponente in der ersten und den folgenden Tarifmeldungen für eine spezifische Betreiber/Vergebührungstyp-Kombination dar. Wenn die genannte Information jedoch gesendet wird, dann ersetzt sie den aktuell aktiven Tarif zu demjenigen absoluten Umschaltezeitpunkt, der in der Informationskomponente 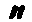 Tarifumschaltezeitpunkt" angezeigt wird.

Eine bereits gesendete Information 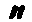 nächster Tarif" wird von einer mit einer weiteren Tarifmeldung gesendeten neuen Information 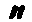 nächster Tarif" überschrieben.

Um Bursts durch das Senden von Tarifmeldungen mit 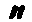 nächsten" Tarifen zum Tarifumschaltezeitpunkt zu vermeiden ist es optimal, die Information 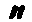 nächster Tarif" zusammen mit der ersten Tarifmeldung zu senden.

Sebstverständlich können mit erhöhtem Sendeaufwand auch dann noch Bursts vermieden werden, wenn die Information 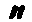 nächster Tarif" erst in einer weiteren Tarifmeldung gesendet wird.

Die Tarifmeldung CRGE bietet somit folgende Vorteile:
- Möglichkeit des sofortigen Umschaltens von einem laufenden auf den eintreffenden Tarif (sofort nach Eintreffen des Tarifs mit der Nachricht),
- Möglichkeit des sekundengenauen Anlegens/Inkraftsetzens des Tarifes, wenn beim Verbindungsaufbau die Meldung 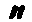 ANSWER" (= Abheben des B-Teilnehmers) kommt,
- Möglichkeit der sekundengenauen Umschaltung zu absoluten Umschaltezeitpunkten bei gleichzeitiger Vermeidung der Belastung des Netzes mit Message-Bursts zu absoluten Umschaltezeitpunkten, wie z. B. 18.00 Uhr oder 21.00 Uhr. Zu diesen Umschaltezeitpunkten müßten sonst pro stehender Verbindung jeweils eine Meldung losgeschickt werden, was zur erheblichen Belastung des Netzes (gegebenenfalls zum Zusammenbrechen) führen würde. Die Message-Bursts werden genauer gesagt dadurch vermieden, daß ein zeitversetztes Senden der Tarifmeldung mit den darin enthaltenen Umschaltezeitpunkten erfolgt (jeder Call startet ja zu unterschiedlichen Zeiten) und in einer Tarifmeldung bereits der zu einem absoluten Umschaltezeitpunkt nächsfolgende Tarif enthalten ist (90 % aller Verbindungen dauern nicht länger als drei bis fünf Minuten, so daß ein zweiter Tarif (nächstfolgender Tarif) im allgemeinen ausreichend ist).

Die Tarifmeldung CRAO (Charge Add On Message) stellt eine zeitunabhängige Tarifinformation (einmalige Zusatzvergebührung) dar, die einmalig auf den bereits aktiven Tarif aufgeschlagen wird. Die Registrierung dieser Zusatzvergebührung erfolgt entweder durch zusätzliche separate Abspeicherung oder/und Addition auf das bereits online errechnete Entgelt.

Mit Hilfe der genannten Nachricht wird eine bereits laufende, gegebenenfalls aktive Gebührendatenerfassung somit nicht gestört bzw. unterbrochen, wenn eine Festgebühr während der Verbindung anfällt (z. B. für eine gebührenpflichtige Seite im Internet).

Durch die Bestätigungsmeldung CRA (Acknowledgement Message) erfolgt die Bestätigung von eingetroffenen Tarifmeldungen. Durch die genannte Bestätigung wird die (Rechts-) Sicherheit für die spätere Absicherung zwischen Betreibern gewährleistet. Außerdem erfolgt durch die genannte Nachricht die Übermittlung der Kennung des Betreibers, der den Tarif erfaßt und/oder umsetzt, um diesem Betreiber gegenüber dem den Tarif aussendenden Betreiber bekanntzugeben.

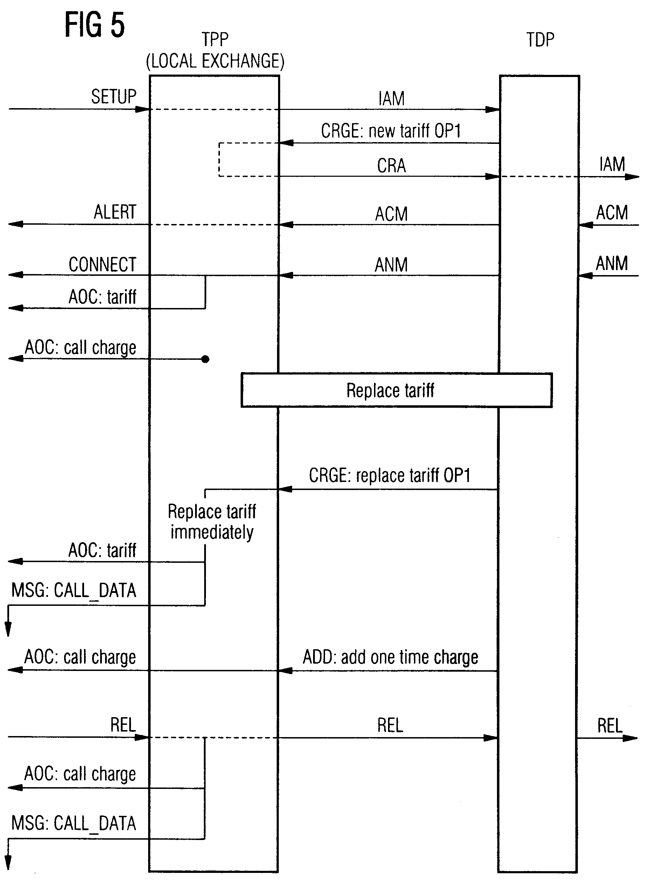

Die FIG 5 bis 8 zeigen Nachrichtenflüsse, die im Zusammenhang mit der Vergebührung auftreten.

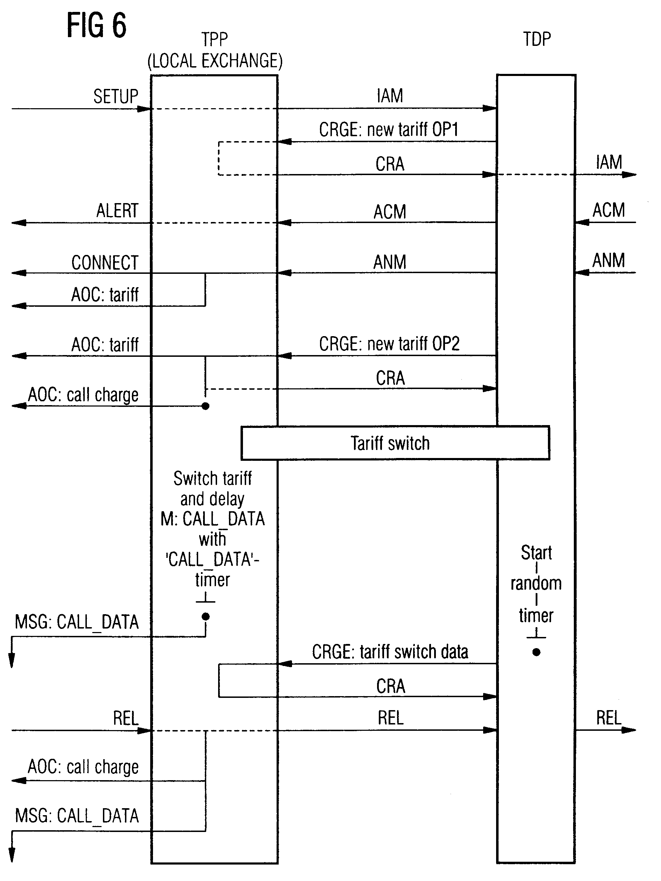

Die FIG 5 und 6 zeigen die Nachrichtenflüsse für den Fall, daß die Gebührenaufzeichnung in der lokalen Vermittlungsstelle erfolgt, wobei in FIG 5 ein sofortiger Tarifwechsel in Kombination mit Zusatzgebühren dargestellt ist und in FIG 6 ein Tarifwechsel zu einem absoluten Umschaltezeitpunkt.

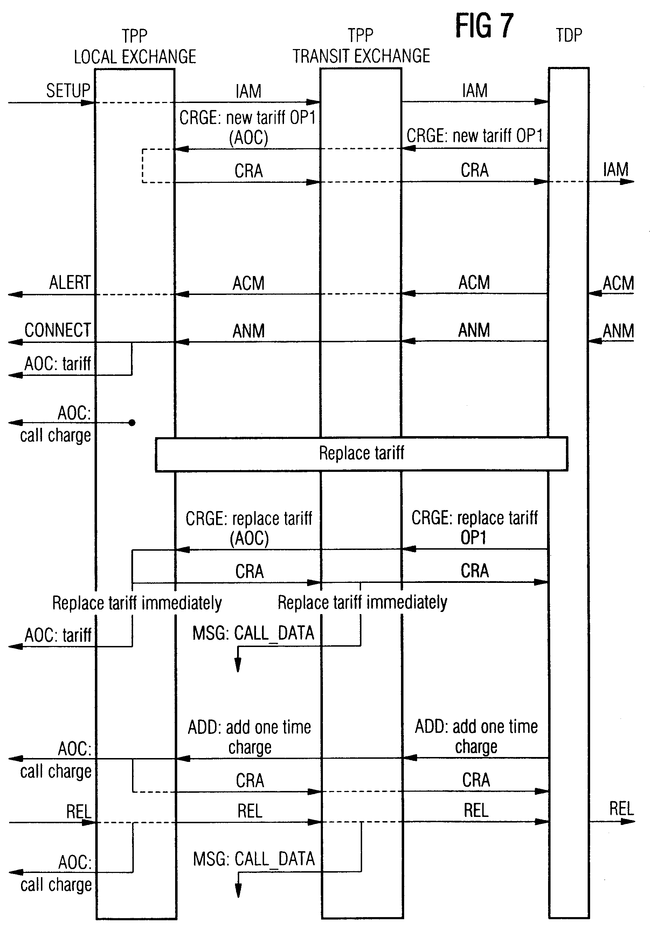

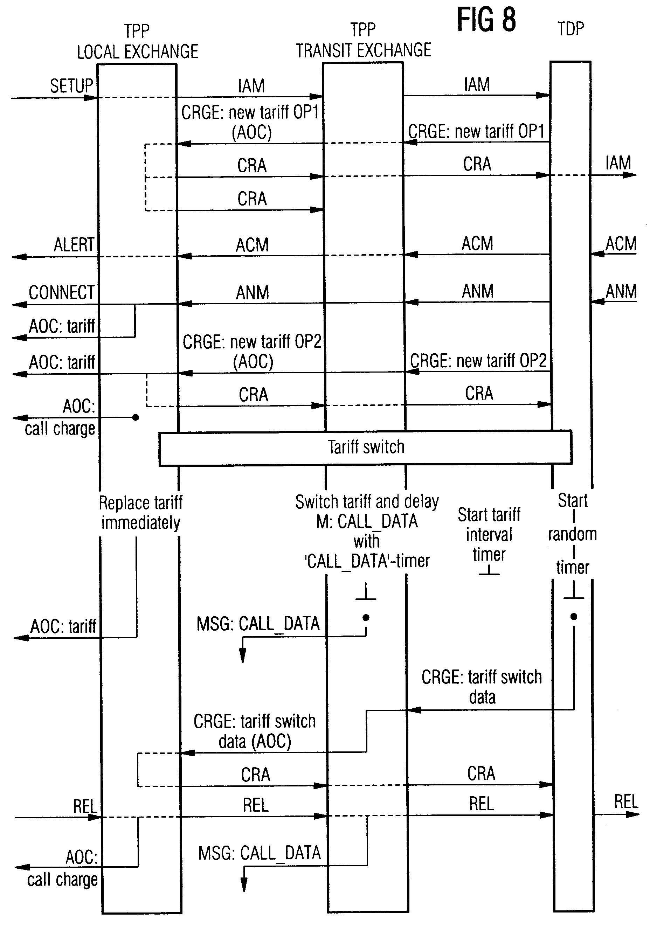

Die FIG 7 und 8 zeigen die Nachrichtenflüsse für den Fall, daß die Gebührenaufzeichnung in einer Transitvermittlungsstelle erfolgt und in der lokalen Vermittlungsstelle nur die Gebührenanzeige, wobei in FIG 7 ein sofortiger Tarifwechsel dargestellt ist und in FIG 8 ein Tarifwechsel zu einem absoluten Umschaltezeitpunkt.

Die in den Figuren 5 bis 8 abgekürzt angegebenen Nachrichten werden im folgenden erläutert.

Die Nachrichten SETUP und IAM (Initial Adress Message) dienen dem Verbindungsaufbau. Die IAM enthält u.a. die Information, ob die Tarifbestimmmung für das Teilnetz eines jeweiligen Betreibers bereits von einer vorhergehenden Vermittlungsstelle durchgeführt wurde oder nicht.

Die Nachricht ACM (Adress Complete Message) signalisiert der A-Teilnehmervermittlungsstelle, daß keine weiteren Adreßkennziffern mehr benötigt werden.

Die Nachricht ALERT signalisiert dem A-Teilnehmer, daß der B-Teilnehmer nicht belegt ist und bei diesem nunmehr ein Klingelzeichen ertönt.

Die Nachricht ANM (Answer) signalisiert der A-Teilnehmervermittlungsstelle, daß der B-Teilnehmer aktiv geworden ist (z. B. seinen Handapparat abgehoben hat).

Die Nachricht CONNECT veranlaßt die Durchschaltung eines Sprachkanals zwischen A-Teilnehmervermittlungsstelle und dem A-Teilnehmer.

Wie aus den FIG 5 bis 8 ersichtlich, erfolgt die Weiterleitung IAM-Meldung von dem TDP erst, nachdem die Vergebührungsbestätigungsnachricht CRA von dem bzw. den Tarif-Verarbeitungs-Punkt empfangen wurde.

Falls der Teilnehmer die Berechtigung zur Gebührenanzeige (Advice of Charge, kurz AOC) hat, wird ihm beim Melden des Teilnehmers der für die Verbindung gültige Tarif übermittelt. Während der Verbindung werden dem Teilnehmer die angefallenen Gebühren periodisch angezeigt.
Entscheidet sich der Operator im TDP zum sofortigen Tarifwechsel, wird der neue Tarif mittels der CRGE-Meldung zum TPP transferiert. Beim Eintreffen dieser Meldung, wird
- der aktuelle Tarif sofort durch den neuen Tarif ersetzt,
- dem Teilnehmer dieser neue Tarif angezeigt (AOC),
- es wird, getriggert durch die CALL_DATA-Meldungdes GP an den CP, ein Datensatz (Record, Ticket) für den Verbebührungszeitraum mit dem alten Tarif erzeugt.

Fällt anschließend eine Festgebühr an, wird diese Gebühr mittels der Add-On-Meldung im TPP registriert und dem Teilnehmer angezeigt.
Schließlich werden dem Teilnehmer beim Auslösen der Verbindung (Meldung 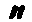 Release" oder 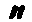 REL") die bis dahin angefallenen Gebühren angezeigt und via eine CALL_DATA-Meldung wird der Vergebührungszeitraum mit einem End-Record abgeschlossen.

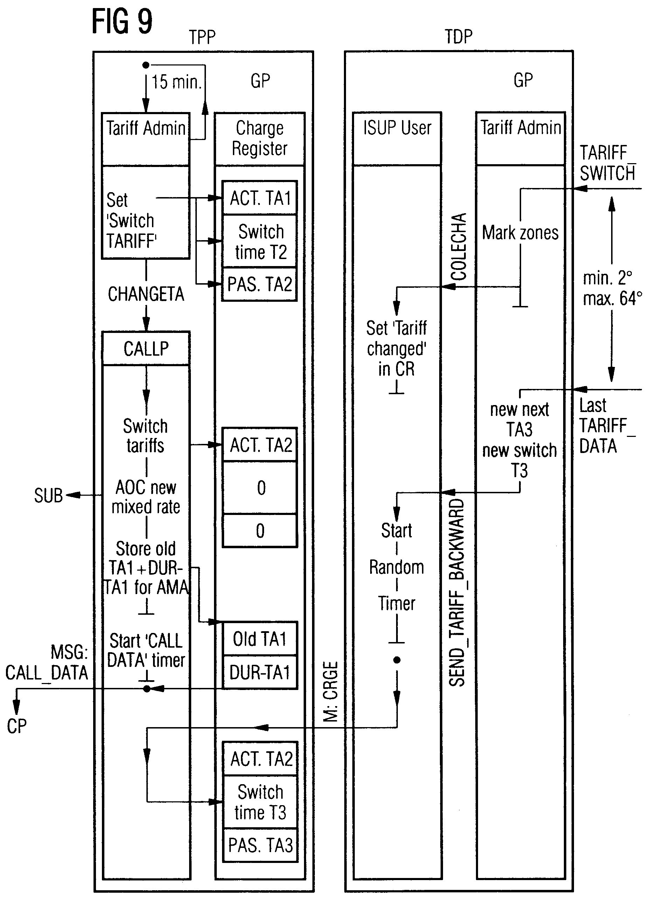

FIG 9 zeigt detaillierte gebührenspezifische Abläufe in einem Tarif-Bestimmungs-Punkt TDP, d.h. in einer Vermittlungsstelle, die den Tarif bestimmt und einem Tarif-Verarbeitungs-Punkt TPP (Tariff Processing Point), d.h. einer Vermittlungsstelle, die gebührenspezifische Vorgänge durchführt, wobei unter gebührenspezifischen Vorgängen die Aufzeichnung (Erfassung) der Vergebührung und/oder die Gebührenanzeige und/oder die Gebührenlimitüberwachung (in FIG 9 nicht dargestellt) zu verstehen ist.

Es folgt zunächst die Beschreibung der Abläufe in dem TDP.

Zu einem Tarifumschaltezeitpunkt, wird im TDP die Tarif-Verwaltung eines Gruppenprozessors GP (der GP steuert jeweils eine Anschlußgruppe der Vermittlungsstelle) durch das Kommando 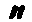 TARIFF SWITCH" getriggert (Kommando kommt vom Zentralprozessor CP des TDPs), woraufhin die Tarif-Verwaltung (Tarif-Administration) folgende Aktivitäten durchführt:
- sie macht den passiven Tarif in der Tarif-Datenbasis zum aktiven Tarif,
- sie markiert in der Tarifumschaltebitkarte die Zonen, die durch die Tarifumschaltung beeinflußt werden und
- sie sendet schließlich die Meldung COLECHA zu allen ISUP-Usern (ein ISUP-User ist eine Callprocessing-Instanz, die zur Bearbeitung einer Verbindung in einem Transitknoten beiträgt).

Nach Empfang der genannten Nachricht führen die genannten ISUP-User folgende Aktivitäten durch:
- sie überprüfen, ob die eigene benutzte Zone eine der markierten Zonen ist, für die eine Tarifumschaltung relevant ist,
- sie veranlassen, daß das Flag 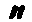 Tariff Changed" im Callregister CR gesetzt wird, falls die genannte eigene Zone durch die Tarifumschaltung berührt wird. Das genannte Flag wiederum triggert später das Rückwärtssenden eines neuen passiven Tarifs. Das genannte Flag darf solange nicht zurückgesetzt werden, bis die Nachricht CRGE gesendet worden ist.

Nach dem Kommando 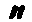 TARIFF SWITCH" wird die aktuelle Tariftabelle der Tarif-Datenbasis über das CP-Kommando 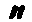 TARIFF DATA", das gegebenenfalls mehrfach erfolgt, in den GP geladen. Damit werden die neuen passiven Taife geladen. Nach dem Empfang des letztmaligen Kommandos 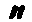 TARIFF DATA" sendet die Tarif-Verwaltung das neue kollektive Ereignis 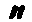 SEND TARIFF BACKWARD" zu allen ISUP-Benutzern.

Aufgrund des Empfangs des neuen kollektiven Ereignisses 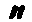 SEND TARIFF BACKWARD" überprüft ein ISUP-Benutzer das Flag 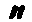 Tariff Changed" im Callregister. Falls das genannte Flag gesetzt ist wird ein neuer zufallsgesteuerter Timer gestartet. Bei Ablauf des genannten zufallsgesteuerten Timers wird der neue passive Tarif mit zugehörigem absoluten Umschaltezeitpunkt für den neuen Tarif und ggfs. der aktuelle aktive Tarif über die erweiterte CRGE-Nachricht in rückwärtiger Richtung gesandt. Schließlich wird das Flag 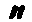 Tariff Changed" im Callregister CR zurückgesetzt.

Der genannte zufallsgesteuerte Timer schützt vor einem Nachrichten-Burst und hat folgenden fallabhängigen Algorithmus:

### Fall 1:

Der nächste Tarif-Umschaltezeitpunkt ist in weniger als 15 Minuten. In diesem Fall wird der zufallsgesteuerte Timer auf einen Arbeitsbereich von 0 bis 10 Minuten eingestellt.

### Fall 2:

Der nächste Tarif-Umschaltezeitpunkt ist erst in mehr als 15 Minuten. In diesem Fall wird eine Überwachung veranlaßt, die 15 Minuten vor der genannten Tarif-Umschaltezeit erkennt, daß eine Tarifumschaltung durchgeführt werden muß. Aufgrund dieser Erkenntnis wird wiederum der zufallsgesteuerte Timer innerhalb eines Arbeitsbereichs von 0 bis 10 Minuten gestartet.

In beiden genannten Fällen werden die aktiven Verbindungen bei Ablauf des genannten Timers durch die CRGE-Nachricht informiert. Wenn ein aktiver Call ausgelöst wird, bevor der genannte zufallsgesteuerte Timer abgelaufen ist, wird der genannte Timer gestoppt und keine Tarifinformation in rückwärtiger Richtung abgesandt.

Im folgenden werden die Umschaltefunktionen in dem Tarif-Verarbeitungs-Punkt näher erläutert.

Da die empfangenen Tarifinformationen und ihre entsprechenden Umschaltezeitpunkte nur in einem transienten Vergebührungsregister (Charge Register) des GPs gespeichert werden, wird die Tarifumschaltefunktion durch einen zyklischen Prozess des GPs realisiert. Für die genannte Realisierung gibt es zwei Varianten.

Bei der ersten Variante überprüft der zentrale zyklische Prozess alle Tarife, die nach Erreichen von jeweils einer Viertelstunde geändert werden sollen und triggert nur die relevanten Verbindungen. Diese Variante dient der dynamischen Entlastung des Call-Processings. Zur Durchführung dieser Variante muß der Prozess auf alle Charge Register zugreifen, die darin enthaltenen Tarife überprüfen und von der Umschaltung betroffene Tarife markieren (Set 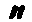 Switch Tariff"). Wenn wenigstens ein Tarif gefunden wird, wird das neue kollektive Ereignis 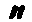 CHANGE TARIFF" (= CHANGETA) zu allen Callprocessing-Instanzen CALLP gesandt.

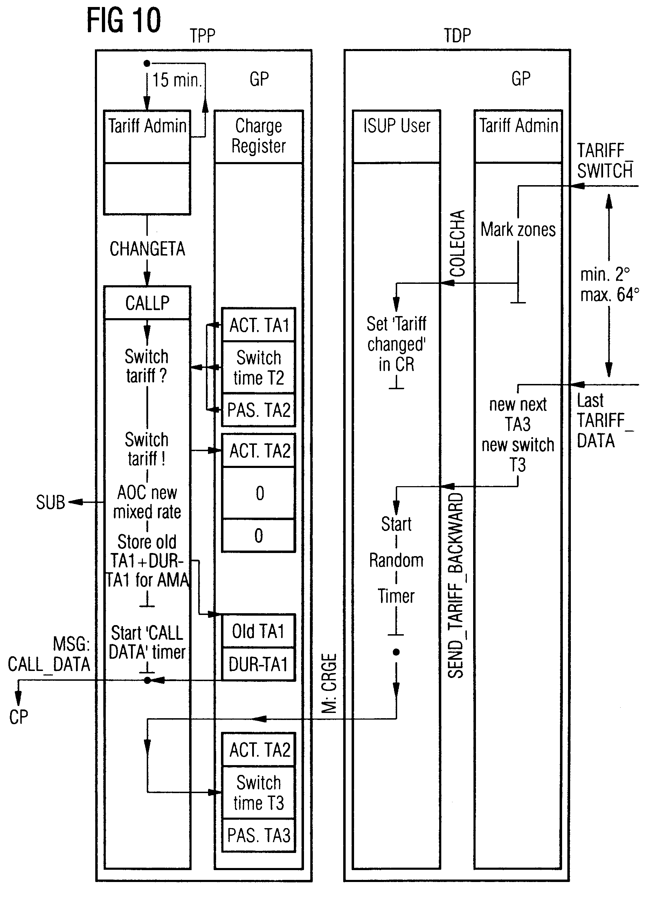

FIG 10 enthält die Darstellung der zweiten Variante. Bei der zweiten Variante triggert der zyklische Prozess alle aktiven Calls (Callprocessing-Instanzen CALLP) jeweils nach einer Viertelstunde. Die Calls checken daraufhin selbst, ob Tarife für sie umgeschaltet werden müssen oder nicht. Die zweite Variante gewährleistet somit, daß nur das-Call-Processing auf die Charge Register zugreifen kann (Verbesserung der Datensicherheit).

Wenn eine Tarifumschaltung notwendig ist, wird eine Call-processing-Instanz CALLP bei beiden Varianten unverzüglich die von der Umschaltung betroffenen Tarife ihres Calls umschalten, d.h.
- die Call-Dauer DUR-TA1 seit der letzten Tarifumschaltung oder einer zwischenzeitlichen Gebührenspeicherung im CP wird bestimmt (Diese Call-Dauer wird für alle Betreiber (Operator) gemeinsam benutzt),
- die Call-Vergebührung wird gemäß dem aktuellen aktiven Tarif (einschließlich demjenigen, der geändert wird) kalkuliert und im Vergebührungsregister zu der kumulativen Summe der bisher aktuellen Call-Vergebührung addiert. Die aktuelle Call-Vergebührung wird insbesondere z.B. zum Zwecke der Gebührenanzeige und/oder der Gebührenlimitüberwachung benötigt.
- im Vergebührungsregister (Charge Register) des GPs wird der aktuelle aktive Tarif TA1 durch den nächsten Tarif TA2 ersetzt. Außerdem werden der nächste Tarif, der Tarifumschaltezeitpunkt und das Flag 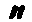 SWITCH TARIFF" zurückgesetzt.
- die Nachricht 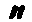 CALL DATA" (Trigger für die Record-Erzeugung im CP) wird mit den vorherigen aktiven Tarifen eines jeweiligen Betreibers an den CP gesendet. Diese CALL_DATA-Nachricht wird dann vom CP auf dem Plattenspeicher in einem AMA-Datensatz (AMA=Automatic Message Accounting, kurz AMA-Record) abgelegt, wobei anhand der AMA-Records durch das spätere Postprocessing die Rechnung für den Teilnehmer erstellt wird. Der unveränderte Tarif der anderen Betreiber wird ebenfalls in der Nachricht 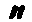 CALL DATA" mitgeliefert, weil im Vergebührungsregister CR und im AMA-Record nur eine einzige Call-Dauer für AMA (wird im weiteren auch als 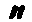 Calldauer" oder 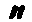 AMA-Dauer" bezeichnet), die für alle Betreibertarife gemeinsam ist, benutzt wird. Diese Verfahrensweise vereinfacht die Vergebührungsprozeduren im GP und im Post Processing.

Falls viele bzw. alle Betreiber ihren Tarif zu demselben absoluten Umschaltezeitpunkt ändern wollen, wurde die Tarifänderung viele bzw. alle Calls betreffen und es müßte zu diesem Zeitpunkt für viele bzw. alle Calls jeweils die Nachricht 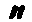 CALL DATA" zum CP erfolgen. Um einen derartigen Burst und damit einen etwaigen Verlust dieser Nachrichten zu verhindern wird das Senden einer solchen Nachricht bis zum Ablauf eines sogenannten 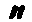 CALL DATA"-Timers verzögert. Der genannte Timer wird wie folgt berechnet:
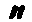 CALL DATA"-Timer = Calldauer Modulo (15 Minuten)
Der genannte Timer wird also von der Calldauer abgeleitet, die für jeden Call unterschiedlich ist. Um die Calldauer für die nächste Tarifumschaltung unterschiedlich zu halten, darf der Timer für die zwischenzeitliche Gebührenspeicherung im CP nicht zurückgesetzt werden. Die 15 Minuten stellen das minimale Zeitintervall zwischen zwei absoluten Umschaltezeiten dar.
- wegen der genannten Verzögerung der CALL_DATA-Nachricht müssen der alte Tarif (Old TA1) und die korrespondierende Calldauer (DUR-TA1) für das Automatic Message Accounting vorher kurzzeitig im Vergebührungsregister des GPs gespeichert werden, bevor der neue Tarif aktiviert wird.
- die gemeinsam benutzte Calldauer wird schließlich zurückgesetzt und ein neuer Zeitstempel gesetzt.
- bei Empfang einer neuen CRGE-Nachricht datiert die Call-Instanz ihr Vergebührungsregister mit dem neuen passiven Tarif und dem neuen Tarifumschaltezeitpunkt (eventuell mit dem aktuellen mitgelieferten Tarif) auf.

## Patentansprüche

1. Verfahren zur Vergebührung von Verbindungen in einem Kommunikationsnetz, demgemäß
von einem Tarif-Bestimmungs-Punkt (TDP) zu einem Tarif-Verarbeitungs-Punkt (TPP) Tarifmeldungen übertragen werden,
**dadurch gekennzeichnet, daß**
in einer Tarifmeldung (CRGE) ein aktueller Tarif und/oder mindestens ein nächstfolgender Tarif mit zugehörigem Tarifumschaltezeitpunkt für den nächstfolgenden Tarif übertragen werden.

2. Verfahren nach Anspruch 1,
**dadurch gekennzeichnet, daß**
in einer Tarifmeldung (CRGE) zu Beginn einer Verbindung ein aktueller Tarif und ein nächstfolgender Tarif mit zugehörigem Tarifumschaltezeitpunkt für den nächstfolgenden Tarif übertragen werden.

3. Verfahren nach Anspruch 1 oder 2,
**dadurch gekennzeichnet, daß**
eine Tarifmeldung (CRGE) während einer Verbindung von dem Tarif-Verarbeitungs-Punkt (TPP) als Befehl für ein sofortiges Tarif-Umschalten interpretiert wird, wenn die Tarifmeldung einen aktuellen Tarif enthält.

4. Verfahren nach einem der Ansprüche 1 bis 3,
**dadurch gekennzeichnet, daß**
eine Tarifmeldung (CRGE) während einer Verbindung von dem Tarif-Verarbeitungs-Punkt (TPP) als Befehl für ein Abspeichern der Tarifmeldung interpretiert wird, wenn die Tarifmeldung nur den nächstfolgenden Tarif mit zugehörigem Tarifumschaltezeitpunkt enthält.

5. Verfahren nach einem der Ansprüche 1 bis 4,
**dadurch gekennzeichnet, daß**
Tarifmeldungen für unterschiedliche Verbindungen, die dieselbe Tarifänderung beinhalten, vom Tarif-Bestimmungs-Punkt (TDP) zum Tarif-Verarbeitungs-Punkt (TPP) zeitverschieden gesendet werden.

6. Verfahren nach einem der Ansprüche 1 bis 4,
**dadurch gekennzeichnet, daß**
Tarifmeldungen für unterschiedliche Verbindungen, die dieselbe Tarifänderung beinhalten, vom Tarif-Bestimmungs-Punkt (TDP) zum Tarif-Verarbeitungs-Punkt (TPP) zufallsgesteuert gesendet werden.

7. Vergebührungssystem eines Kommmunikationsnetzes, mit
a) einem Tarif-Ermittlungs-Punkt (TDP),
b) einem Tarif-Verarbeitungs-Punkt (TPP), wobei
dem Tarif-Verarbeitungs-Punkt (TPP) vom Tarif-Ermittlungs-Punkt (TDP) eine Tarifmeldung (CRGE) zugesendet wird, um diesem eine Tarifumschaltung anzuzeigen,
**dadurch gekennzeichnet, daß**
eine Tarifmeldung (CRGE) einen aktuellen Tarif und/oder mindestens einen nächstfolgenden Tarif mit zugehörigem Tarifumschaltezeitpunkt für den nächstfolgenden Tarif enthält.

8. Tarif-Bestimmungs-Punkt eines Kommmunikationsnetzes, mit
einem Call-Processing (CallP), das bei Empfang der Information über eine Tarifänderung veranlaßt, daß für jeden Call, der von der Tarifänderung betroffen ist, eine Tarifmeldung zum Tarif-Verarbeitungs-Punkt (TPP) erfolgt, wobei die Tarifmeldung einen aktuellen Tarif und/oder mindestens einen nächstfolgenden Tarif mit zugehörigem Tarifumschaltezeitpunkt für den nächstfolgenden Tarif enthalten kann, und wobei das Senden der Tarifmeldung zufallsgesteuert erfolgt.

9. Tarif-Verarbeitungs-Punkt eines Kommmunikationsnetzes,
der von einem Tarif-Bestimmungs-Punkt (TDP) für bestehende Verbindungen Tarifmeldungen empfängt, wobei die Tarifmeldungen einen aktuellen Tarif und/oder mindestens einen nächstfolgenden Tarif mit zugehörigem Tarifumschaltezeitpunkt für den nächstfolgenden Tarif enthalten können,
mit
a) einer Tarifadministration, die zyklisch für alle Verbindungen überprüft, ob ein Tarif einer Verbindung umgeschaltet werden muß, und die einen als umzuschaltend erkannten Tarif markiert,
b) einem Call-Processing zur Call-Behandlung, das von der Tarifadministration veranlaßt wird, die Umschaltung eines markierten Tarifes durchzuführen.

10. Tarif-Verarbeitungs-Punkt eines Kommmunikationsnetzes, der von einem Tarif-Bestimmungs-Punkt (TDP) für bestehende Verbindungen Tarifmeldungen empfängt, wobei die Tarifmeldungen einen aktuellen Tarif und/oder mindestens einen nächstfolgenden Tarif mit zugehörigem Tarifumschaltezeitpunkt für den nächstfolgenden Tarif enthalten können,
mit
einem Call-Processing zur Call-Behandlung, das zyklisch überprüft, ob ein Tarif einer Verbindung umgeschaltet werden muß und, wenn ja, die Umschaltung durchführt.
